# EUROPEAN PATENT SPECIFICATION

(11) **EP 1 086 579 B1**
(45) Date of publication and mention of the grant of the patent: **21.11.2007**
(21) Application number: 99923827.2
(22) Date of filing: 08.06.1999
(51) Int. Cl.: H04N 5/00

(54) **DECODER FOR, AND METHOD OF, PROCESSING A TRANSPORT PACKET STREAM**
DECODER UND VERFAHREN FÜR DIE VERARBEITUNG EINES TRANSPORT-PAKETSTROMS
DECODEUR ET PROCEDE POUR LE TRAITEMENT D'UN FLUX DE TRANSPORT ASSEMBLE EN MODE PAQUET

(30) Priority: 08.06.1998 EP 98401374
(43) Date of publication of application: 28.03.2001
(73) Proprietor: Nagra Thomson Licensing, 92100 Boulogne-Billancourt (FR)
(72) Inventor: DECLERCK, Christophe, F-28210 Senantes (FR)
(74) Representative: Wenger, Joel-Théophile
(86) International application number: PCT/IB1999/001164
(87) International publication number: WO 1999/065231

(56) References cited:
- EP-A- 0 696 141
- EP-A- 0 723 371
- EP-A- 0 884 906
- EP-A- 0 893 913
- EP-A- 0 893 921
- EP-A- 0 910 217
- EP-A- 0 935 382
- WO-A-95/29560
- WO-A-97/46008
- "FUNCTIONAL MODEL OF A CONDITIONAL ACCESS SYSTEM" 21 December 1995 (1995-12-21) , EBU REVIEW- TECHNICAL, NR. 266, PAGE(S) 64 - 77 XP000559450 the whole document
- SCHOONEVELD VAN D: "STANDARDIZATION OF CONDITIONAL ACCESS SYSTEMS FOR DIGITAL PAY TELEVISION" PHILIPS JOURNAL OF RESEARCH, vol. 50, no. 1/02, July 1996 (1996-07), pages 217-225, XP000627672

## Description

The present invention relates to a decoder for, and a method of, processing a transport packet stream. The invention is particular suitable for a receiver/decoder for a digital transmission system, in particular for use in a digital television system.

Conventional digital television broadcast systems transmit data in the form of discrete transport stream packets or transport packets, each packet being of a predetermined length and containing a header and a payload. The MPEG standard is the currently favoured standard in this domain and sets out, amongst other things, a predetermined format for such packets.

The packet header comprises general descriptive data regarding the packet, whilst the payload comprises the data to be processed at the receiver/decoder. The packet header includes at least a packet ID or PID identifying the packet. The payload of the packet may contain audio, video or other data such as application data or, in particular, conditional access system data.

Conventionally, the incoming data stream is filtered by a receiver/decoder according to the PID of each packet. Data requiring immediate processing such as audio or visual data is communicated to an appropriate processor in the form of what is conventionally known as a packetised elementary stream or PES. This continuous flux of data, which is formed by assembling the payloads of the transport packets, itself comprises a sequence of packets, each PES packet comprising a packet header and payload.

Other data not requiring immediate processing may also be encapsulated within the payloads of the transport packets. Unlike PES data, which is treated immediately by a processor to generate a real time output, this sort of data is typically processed in an asynchronous manner by the receiver/decoder processor. In this case, data is formatted in a single table or a series of sections or tables, each including a header and a payload, the header of the section or table including a table ID or TID.

In the case where the access to a transmission is to be restricted, for example, in a pay TV system, conditional access data may be included in a table or section broadcast in the transport stream with the transmission. This conditional access data is filtered by the decoder and passed to a portable security module, such as smartcard, inserted in the decoder. The data is then processed by the smartcard in order to generate, for example, a control word subsequently used by the decoder to descramble a transmission.

One problem lies in the volume of data that will be received and processed by the decoder and notably the volume of conditional access data eventually forwarded to the security module. In particular, the processing capabilities of a security module processor and the capacity of the communication channel between the decoder and security module may be insufficient to handle a given volume of messages. This problem is exacerbated by the increasing tendency for programmes to be transmitted with multiple conditional access messages enabling access by different operators to the same programme (e.g. a football match or a thematic television channel).

EP-A-0 723 371 discloses a conditional access decoder arrangement having a demultiplexer which separates out ECMs and EMMs. Positive EMMs (EMM-p) having been separated out by the demultiplexer, are filtered using a filter receiving data provided from the chip-card in order to remove EMMs not addressed to that smartcard. This arrangement is limited to one conditional access system.

WO95/29560 describes apparatus in a receiver for processing transmitted entitlement control information. The apparatus includes a packet transport processor for selecting signal packets having payloads containing a conditional access payload header and a remaining payload of entitlement data. Respective payload headers include groups of bytes which are coded in a manner to allow or disallow the respective receiver from processing the entitlement data. A conditional access filter preprogrammed with a subscriber specific conditional access codeword examines respective byte groupings of the conditional access header for a match with the subscriber specific conditional access codeword. Only if a match occurs is the processor permitted to process the entitlement data. The entitlement data is thereafter utilized to generate decryption keys for descrambling portions of the transmitted signal.

WO97/46008 describes a receiver in which a program representative packetized datastream is generated from an input packetized datastream representing a plurality of programs. Program content packets comprising a desired program selected from the plurality of programs are identified. Condensed program specific information (CPSI) suitable for use in identifying and assembling the identified packets is formed. The resulting CPSI and the identified packets are formed into a datastream. Program specific information packets and program content packets are also extracted from a packetized datastream and stored on a storage medium.

"Functional model of a conditional access system" 21 December 1995, EBU Review Technical, No. 266, Pages 64-77 describes various models for a conditional access system for use with digital television broadcasts.

In a first aspect, the present invention provides a decoder for processing a transport packet stream comprising packets in accordance with claim 1.

Different security modules may be associated with different respective security module systems, each security module storing therein an identifier of the particular system with which it is associated. When the security module is first connected with, or inserted into, the decoder, the security module can communicate the stored identifier to the decoder. The configuring means can then configure the decoder in response to the received identifier in order to extract from the packetised data data associated with the particular security module system. This can provide a simple, cheap and efficient way of configuring the decoder for one of a number of different security module systems.

As described above, the filtering means is configurable to filter the packetised data in response to filter data received from the security module. This can enable the filtering means to configured to filter from the extracted packet data only the packet data which is of interest to the security module. This can enable the flow of data to the security module to be greatly reduced to conform with the processing capabilities of the security module.

In one preferred embodiment, the means for receiving the identifier of the security module system and configuring the decoder comprise an application stored in the decoder, and the means for receiving the filter data and filtering the packetised data comprise a filter.

The filtering means may be configurable by said configuring means to extract from the packetised data data associated with the particular security module system for subsequent filtering in response to the received filter data.

In one preferred embodiment, the identifier comprises an identifier of a particular conditional access system. The decoder can be configured to extract from the packetised data data associated only with the conditional access system used by the security module. This can provide simple customisation of the decoder for any one of a number of different conditional access systems used by respective service providers. Thus, the subscriber need not be limited by, for example, the supplier of the decoder to one conditional access system only.

The filtering means may be adapted to extract from the packetised data transport packets containing a program map table and a conditional access table. The configuring means may be adapted to receive the program map table and conditional access table from the filtering means and configure the filtering means in response to the received identifier and data contained in the program map table and the conditional access table. This can enable the filtering means to identify readily the packet ID of the data associated with the particular conditional access system.

Preferably, the filtering means is configurable in response to filter data comprising at least a table identifier or section identifier for the extracted transport packet data.

Filtering data at the table or section level in response to information from the security module enables a more precise identification and selection of data to be carried out, for example, to extract relevant conditional access messages addressed to the module. The filtering means may equally be configurable in accordance with other data received from the portable security module.

In another preferred embodiment, the identifier comprises an identifier of a particular debiting system used by the security module. Different security modules may utilise different debiting systems for, for example, pay-per-view or pay-per-file events. For example, the security module may store a wallet of electronic tokens, the number of tokens being decreased when such an event is purchased. Alternatively, the security module may include features of a credit card, which may require the decoder to read the credit card details and communicate with a bank in order to debit the subscriber's account by an appropriate amount upon purchase of such an event. By the passing of the identifier to the decoder by the security module, the security module can configure the decoder to perform the debiting operation in the manner supported by the security module.

Alternatively, or additionally, the identifier may comprise an identifier of a particular crediting system used by the security module. Again, different security modules may utilise different crediting systems. For example, the wallet of electronic tokens stored in the security module may be increased, or the subscriber's bank account may be credited, by the program provider when the subscriber has viewed a promotional event, such as a drinks advertisement. By the passing of the identifier to the decoder by the security module, the security module can configure the decoder to perform the crediting operation in the manner supported by the security module.

In a preferred embodiment, the filtering means comprises first filtering means, for example a first set of filters, for extracting from the packetised data data associated with said particular security module system and second filtering means, for example a second set of filters, for filtering the extracted data in response to said filter data.

The at least one of the filters of said second set of filters may be configurable to filter from the packetised data data having a pattern matching said data pattern included in the filter data, or configurable to not filter from the packetised data data having a pattern matching said data pattern included in the filter data.

The at least one of the filters of said second set of filters may be configurable to ignore at least part of said data pattern in response to a data masking pattern included in said filter data.

In a preferred embodiment, the decoder comprises means, such as the filter, for forwarding to the security module conditional access data obtained in accordance with the filter data received from the security module.

Whilst the present invention is particularly adapted to enable a reduction of the volume of conditional access messages communicated between the decoder and the module, it will be nevertheless appreciated that the filtering means may be configured to extract data other than conditional access data and having a destination other than the security module.

Conditional access data filtered and forwarded to the security module may comprise entitlement control messages (ECMs) and/or entitlement management messages (EMMs).

Even within a group ofmessages associated with a single conditional access system there may be a large number of messages irrelevant to a particular user within that system. For example, within a single conditional access system a number of different groups of users may be defined leading to the generation of a number of EMMs, not all of which may be relevant to a given user.

Preferably therefore, filter data provided by the security module comprises data used by the filter means to extract group and/or individual entitlement management messages addressed to the security module.

In one embodiment, the decoder is adapted to receive a control word generated by the security module in response to the conditional access data forwarded thereto, the control word being used by the decoder to descramble a scrambled transmission.

In order to preserve security, some or all communications between the security module and the decoder may be encrypted. In particular, the descrambling control word generated by the security module and eventually transmitted to the decoder may be encrypted.

Whilst the present invention may apply to any packet transmission system, the present invention is particularly applicable to a decoder adapted to receive an MPEG compatible data stream, for example, comprising table, section or other packetised data encapsulated within the packet payloads.

In this regard, the term "table, section or other packetised data" refers in its broadest sense to any data table, alone or in a sequence; and comprising a header and payload and that is itself encapsulated within a transport packet stream. As will be described in the preferred embodiment, the present invention is particularly applicable to filtering of data contained within an MPEG table, notably a single MPEG short form table.

In the context of this application, the term MPEG refers to the data transmission standards developed by the International Standards Organisation working group "Motion Pictures Expert Group" and in particular but not exclusively the MPEG-2 standard developed for digital television applications and set out in the documents ISO 13818-1, ISO 13818-2, ISO 13818-3 and ISO 13818-4. In the context of the present patent application, the term MPEG includes all variants, modifications or developments of MPEG formats applicable to the field of digital data transmission.

The present invention also provides a portable security module for use with a decoder as aforementioned, said security module comprising memory means for storing an identifier of a particular security module system and means for communicating the identifier to the decoder to configure the decoder.

In one preferred embodiment, the portable security module comprises a smartcard. As used herein, the term "smartcard" includes, but not exclusively so, any chip-based card device, or object of similar function and performance, possessing, for example, microprocessor and/or memory storage. Included in this term are devices having alternative physical forms to a card, for example key-shaped devices such as are often used in TV receiver/decoder systems, credit cards, and devices where access to the information stored within the device is restricted.

The present invention also provides a method of processing a transport packet stream comprising packets in accordance with claim 10.

Features described above relating to device aspects of the present invention can also be applied to method aspects, and vice versa.

The term "decoder" or "receiver/decoder" used herein may connote a receiver for receiving either encoded or non-encoded signals, for example, television and/or radio signals, which may be broadcast or transmitted by some other means. Embodiments of such receiver/decoders may include a decoder integral with the receiver for decoding the received signals, for example, in a "set-top box", a decoder functioning in combination with a physically separate receiver, as well as a decoder including additional functions, such as a web browser or integrated with a video recorder or a television.

As used herein, the term "digital transmission system" includes any transmission system for transmitting or broadcasting digital data, for example primarily audiovisual or multimedia digital data. Whilst the present invention is particularly applicable to a broadcast digital television system, the invention may also be applicable to a fixed telecommunications network for multimedia internet applications, to a closed circuit television, and so on.

As used herein, the term "digital television system" includes for example any satellite, terrestrial, cable and other system.

There will now be described, by way of example only, a preferred embodiment of the invention, with reference to the following figures, in which:
Figure 1 shows the overall architecture of a digital TV system according to this embodiment;
Figure 2 shows the architecture of the conditional access system of Figure 1;
Figure 3 shows the hierarchy of MPEG-2 packets, in particular those associated with conditional access messages;
Figure 4 shows the structure of long form and short form MPEG-2 private sections;
Figure 5 shows the elements of a receiver/decoder for use in this embodiment;
Figure 6 shows the elements of the receiver/decoder used to process the transport stream, in particular in relation to conditional access messages; and
Figure 7 shows the structure of the PID and section filters of the filter unit of Fig. 6.

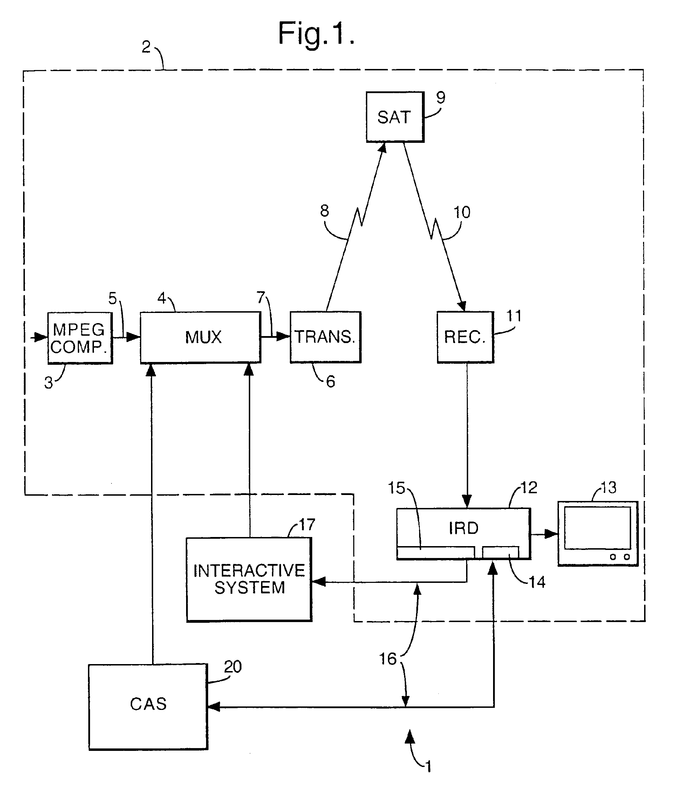

An overview of a digital television broadcast and reception system 1 is shown in Figure 1. The invention includes a mostly conventional digital television system 2 which uses the MPEG-2 compression system to transmit compressed digital signals. In more detail, MPEG-2 compressor 3 in a broadcast centre receives a digital signal stream (for example a stream of audio or video signals). The compressor 3 is connected to a multiplexer and scrambler 4 by linkage 5. The multiplexer 4 receives a plurality of further input signals, assembles one or more transport streams and transmits compressed digital signals to a transmitter 6 of the broadcast centre via linkage 7, which can of course take a wide variety of forms including telecom links.

The transmitter 6 transmits electromagnetic signals via uplink 8 towards a satellite transponder 9, where they are electronically processed and broadcast via a notional downlink 10 to earth receiver 11, conventionally in the form of a dish owned or rented by the end user. The signals received by receiver 11 are transmitted to an integrated receiver/decoder 12 owned or rented by the end user and connected to the end user's television set 13. The receiver/decoder 12 decodes the compressed MPEG-2 signal into a television signal for the television set 13.

A conditional access system 20 is connected to the multiplexer 4 and the receiver/decoder 12, and is located partly in the broadcast centre and partly in the receiver/decoder. It enables the end user to access digital television broadcasts from one or more broadcast suppliers. A smartcard, capable of decrypting messages relating to commercial offers (that is, one or several television programmes sold by the broadcast supplier), can be inserted into the receiver/decoder 12. Using the receiver/decoder 12 and smartcard, the end user may purchase events in either a subscription mode or a pay-per-view mode.

An interactive system 17, also connected to the multiplexer 4 and the receiver/decoder 12 and again located partly in the broadcast centre and partly in the receiver/decoder, may be provided to enable the end user to interact with various applications via a modemmed back channel 16.

The conditional access system 20 will now be described in more detail.

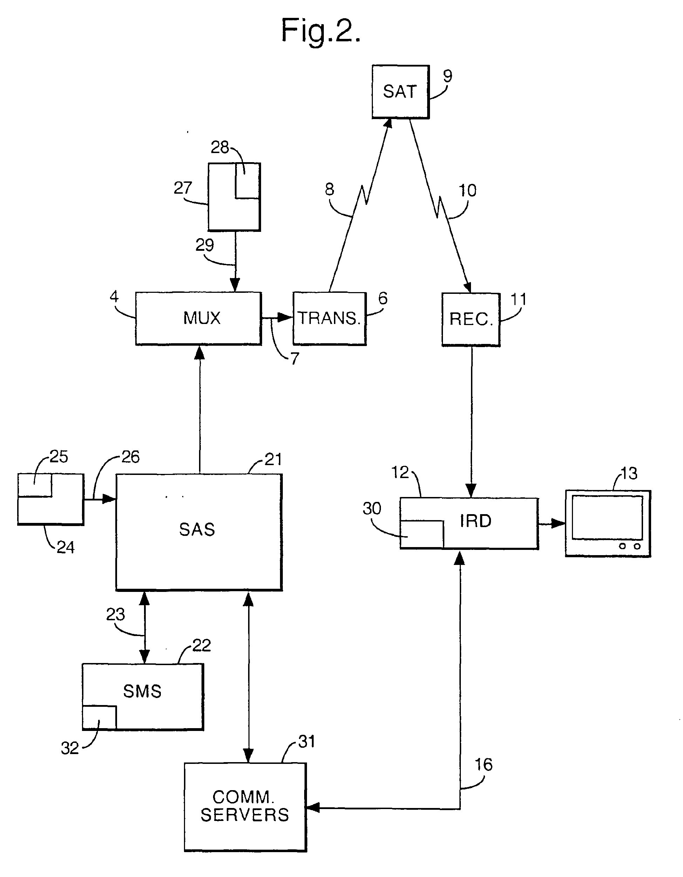

With reference to Figure 2, in overview the conditional access system 20 includes a Subscriber Authorization System (SAS) 21. The SAS 21 is connected to one or more Subscriber Management Systems (SMS) 22, one SMS for each broadcast supplier, by a respective TCP-IP linkage 23 (although other types of linkage could alternatively be used). Alternatively, one SMS could be shared between two broadcast suppliers, or one supplier could use two SMSs, and so on.

First encrypting units in the form of ciphering units 24 utilising "mother" smartcards 25 are connected to the SAS by linkage 26. Second encrypting units again in the form of ciphering units 27 utilising mother smartcards 28 are connected to the multiplexer 4 by linkage 29. The receiver/decoder 12 receives a "daughter" smartcard 30. It is connected directly to the SAS 21 by Communications Servers 31 via the modemmed back channel 16. The SAS sends, amongst other things, subscription rights to the daughter smartcard on request.

The smartcards contain the secrets of one or more commercial operators. The "mother" smartcard encrypts different kinds of messages and the "daughter" smartcards decrypt the messages, if they have the rights to do so.

The first and second ciphering units 24 and 27 comprise a rack, an electronic VME card with software stored on an EEPROM, up to 20 electronic cards and one smartcard 25 and 28 respectively, for each electronic card, one card 28 for encrypting the ECMs and one card 25 for encrypting the EMMs.

The operation of the conditional access system 20 of the digital television system will now be described in more detail with reference to the various components of the television system 2 and the conditional access system 20.

### Multiplexer and Scrambler

With reference to Figures 1 and 2, in the broadcast centre, the digital audio or video signal is first compressed (or bit rate reduced), using the MPEG-2 compressor 3. This compressed signal is then transmitted to the multiplexer and scrambler 4 via the linkage 5 in order to be multiplexed with other data, such as other compressed data.

The scrambler generates a control word used in the scrambling process and included in the MPEG-2 stream in the multiplexer. The control word is generated internally and enables the end user's integrated receiver/decoder 12 to descramble the programme.

Access criteria, indicating how the programme is commercialised, are also added to the MPEG-2 stream. The programme may be commercialised in either one of a number of "subscription" modes and/or one of a number of "Pay Per View" (PPV) modes or events. In the subscription mode, the end user subscribes to one or more commercial offers, or "bouquets", thus getting the rights to watch every channel inside those bouquets. In the preferred embodiment, up to 960 commercial offers may be selected from a bouquet of channels.

In the Pay Per View mode, the end user is provided with the capability to purchase events as he wishes. This can be achieved by either pre-booking the event in advance ("pre-book mode"), or by purchasing the event as soon as it is broadcast ("impulse mode"). In the preferred embodiment, all users are subscribers, whether or not they watch in subscription or PPV mode, but of course PPV viewers need not necessarily be subscribers.

### Entitlement Control Messages

Both the control word and the access criteria are used to build an Entitlement Control Message (ECM). This is a message sent in relation with a scrambled program; the message contains a control word (which allows for the descrambling of the program) and the access criteria of the broadcast program. The access criteria and control word are transmitted to the second encrypting unit 27 via the linkage 29. In this unit, an ECM is generated, encrypted and transmitted on to the multiplexer and scrambler 4. During a broadcast transmission, the control word typically changes every few seconds, and so ECMs are also periodically transmitted to enable the changing control word to be descrambled. For redundancy purposes, each ECM typically includes two control words; the present control word and the next control word.

Each service broadcast by a broadcast supplier in a data stream comprises a number of distinct components; for example a television programme includes a video component, an audio component, a sub-title component and so on. Each of these components of a service is individually scrambled and encrypted for subsequent broadcast to the transponder 9. In respect of each scrambled component of the service, a separate ECM is required. Alternatively, a single ECM may be required for all of the scrambled components of a service. Multiple ECMs are also generated in the case where multiple conditional access systems control access to the same transmitted program.

### Programme Transmission

The multiplexer 4 receives electrical signals comprising encrypted EMMs from the SAS 21, encrypted ECMs from the second encrypting unit 27 and compressed programmes from the compressor 3. The multiplexer 4 scrambles the programmes and sends the scrambled programmes, the encrypted EMMs and the encrypted ECMs to a transmitter 6 of the broadcast centre via the linkage 7. The transmitter 6 transmits electromagnetic signals towards the satellite transponder 9 via uplink 8.

### Programme Reception

The satellite transponder 9 receives and processes the electromagnetic signals transmitted by the transmitter 6 and transmits the signals on to the earth receiver 11, conventionally in the form of a dish owned or rented by the end user, via downlink 10. The signals received by receiver 11 are transmitted to the integrated receiver/decoder 12 owned or rented by the end user and connected to the end user's television set 13. The receiver/decoder 12 demultiplexes the signals to obtain scrambled programmes with encrypted EMMs and encrypted ECMs.

If the programme is not scrambled, that is, no ECM has been transmitted with the MPEG-2 stream, the receiver/decoder 12 decompresses the data and transforms the signal into a video signal for transmission to television set 13.

If the programme is scrambled, the receiver/decoder 12 extracts the corresponding ECM from the MPEG-2 stream and passes the ECM to the "daughter" smartcard 30 of the end user. This slots into a housing in the receiver/decoder 12. The daughter smartcard 30 controls whether the end user has the right to decrypt the ECM and to access the programme. If not, a negative status is passed to the receiver/decoder 12 to indicate that the programme cannot be descrambled. If the end user does have the rights, the ECM is decrypted and the control word extracted. The receiver/decoder 12 can then descramble the programme using this control word. The MPEG-2 stream is decompressed and translated into a video signal for onward transmission to television set 13.

### Entitlement Management Messages (EMMs)

The EMM is a message dedicated to an individual end user (subscriber), or a group of end users. Each group may contain a given number of end users. This organisation as a group aims at optimising the bandwidth; that is, access to one group can permit the reaching of a great number of end users.

Various specific types of EMM can be used. Individual EMMs are dedicated to individual subscribers, and are typically used in the provision of Pay Per View services; these contain the group identifier and the position of the subscriber in that group.

Group subscription EMMs are dedicated to groups of, say, 256 individual users, and are typically used in the administration of some subscription services. This EMM has a group identifier and a subscribers' group bitmap.

Audience EMMs are dedicated to entire audiences, and might for example be used by a particular operator to provide certain free services. An "audience" is the totality of subscribers having smartcards which bear the same conditional access system identifier (CA ID). Finally, a "unique" EMM is addressed to the unique identifier of the smartcard.

### Subscriber Management System (SMS)

A Subscriber Management System (SMS) 22 includes a database 32 which manages, amongst others, all of the end user files, commercial offers, subscriptions. PPV details, and data regarding end user consumption and authorization. The SMS may be physically remote from the SAS.

Each SMS 22 transmits messages to the SAS 21 via respective linkage 23 which imply modifications to or creations of Entitlement Management Messages (EMMs) to be transmitted to end users.

The SMS 22 also transmits messages to the SAS 21 which imply no modifications or creations of EMMs but imply only a change in an end user's state (relating to the authorization granted to the end user when ordering products or to the amount that the end user will be charged).

The SAS 21 sends messages (typically requesting information such as call-back information or billing information) to the SMS 22. so that it will be apparent that communication between the two is two-way.

### Subscriber Authorization System (SAS)

The messages generated by the SMS 22 are passed via linkage 23 to the Subscriber Authorization System (SAS) 21, which in turn generates messages acknowledging receipt of the messages generated by the SMS 21 and passes these acknowledgements to the SMS 22.

In overview the SAS comprises a Subscription Chain area to give rights for subscription mode and to renew the rights automatically each month, a Pay Per View Chain area to give rights for PPV events, and an EMM Injector for passing EMMs created by the Subscription and PPV chain areas to the multiplexer and scrambler 4, and hence to feed the MPEG stream with EMMs. If other rights are to be granted, such as Pay Per File (PPF) rights in the case of downloading computer software to a user's Personal Computer, other similar areas are also provided.

One function of the SAS 21 is to manage the access rights to television programmes, available as commercial offers in subscription mode or sold as PPV events according to different modes of commercialisation (pre-book mode, impulse mode). The SAS 21, according to those rights and to information received from the SMS 22, generates EMMs for the subscriber.

The EMMs are passed to the Ciphering Unit (CU) 24 for ciphering with respect to the management and exploitation keys. The CU completes the signature on the EMM and passes the EMM back to a Message Generator (MG) in the SAS 21, where a header is added. The EMMs are passed to a Message Emitter (ME) as complete EMMs. The Message Generator determines the broadcast start and stop time and the rate of emission of the EMMs, and passes these as appropriate directions along with the EMMs to the Message Emitter. The MG only generates a given EMM once; it is the ME which performs cyclic transmission of the EMMs.

On generation of an EMM, the MG assigns a unique identifier to the EMM. When the MG passes the EMM to the ME, it also passes the EMM ID. This enables identification of a particular EMM at both the MG and the ME.

In systems such as simulcrypt which are adapted to handle multiple conditional access systems e.g. associated with multiple operators, EMM streams associated with each conditional access system are generated separately and multiplexed together by the multiplexer 4 prior to transmission.

### Conditional Access Messages in the Transport Stream

The different nature of ECM and EMM messages leads to differences vis a vis the mode of transmission of the messages in the MPEG transport stream. ECM messages, which carry the control words needed to descramble a programme are necessarily linked to the video and audio streams of the programme being transmitted. In contrast EMM messages are general messages broadcast asynchronously to transmit rights information to individual or groups of customers. This difference is reflected in the placing of ECM and EMM messages within the MPEG transport stream.

As is known, MPEG transport packets are of a fixed length of 188 bytes including a header. In a standard packet, the three bytes of the header following the synchronisation data comprise:

**TABLE I**

| | |
|---|---|
| Transport error indicator | 1 bit |
| Payload unit indicator | 1 bit |
| Transport priority | 1 bit |
| PID | 13 bits |
| Transport scrambling control | 2 bits |
| Adaptation field control | 2 bits |
| Continuity counter | 4 bits |

The characteristics of these fields are largely determined by the MPEG standard.

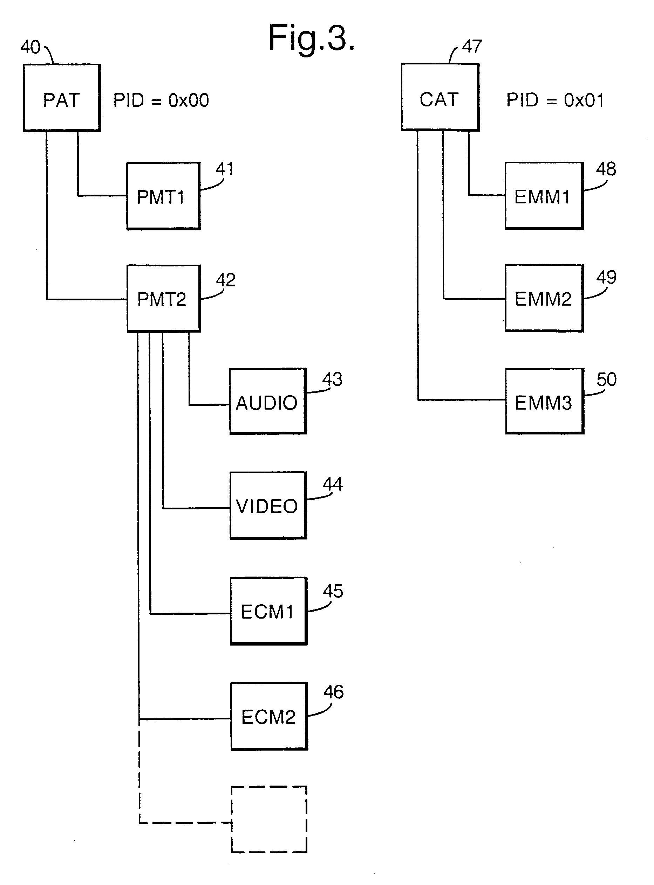

Referring to Figure 3, the organisation of data within a transport stream will be described. As shown, the transport stream contains a programme association table 40 ("PAT"), the PID in the header of the packet being fixed by the MPEG-2 standard at a value of 0x00. The programme access table 40 provides the entry point for access to programme data and contains a table referring to the PID values of the programme map tables ("PMT") 41, 42 associated with a number of programmes. Each programme map table 41, 42 contains in turn a reference to the PID values of the packet streams of the audio tables 43 and video tables 44 of that programme.

As shown, the programme map table 42 also contains references to the PID values of other packets 45, 46 containing additional data relating to the programme in question. In the present case ECM data generated by a number of conditional access systems and associated with the programme in question is contained within the referred packets 45, 46.

In addition to the programme access table PAT 40, the MPEG transport stream further comprises a conditional access table 47 ("CAT"), the PID value of which is fixed at 0x01. Any packet headers containing this PID value are thus automatically identified as containing access control information. The CAT table 47 refers to the PID values of MPEG packets 48, 49, 50 associated with EMM data associated with one or more conditional access systems. As with the PMT packets, the PID values of the EMM packets referred to in the CAT table are not fixed and may be determined at the choice of the system operator.

### Private Section Data

In conformity with the MPEG-2 standard, information contained with a packet payload is subject to a further level of structure according to the type of data being transported. In the case of audio, visual, teletext, subtitle or other such rapidly evolving and synchronised data, the information is assembled in the form of what is known as a packetised elementary stream or PES. This data stream, which is formed by assembling the payloads of the transmitted packets, itself comprises a sequence of packets, each packet comprising a packet header and payload. Unlike the transmitted packets in the transport stream, the length of PES packets is variable.

In the case of other data, such as application data or, in this example, ECM and EMM data, a different format from PES packeting is proscribed. In particular, data contained in the transport packet payload is divided into a series of sections or tables, the table or section header including a table ID or TID identifying the table in question. Depending on the size of the data, a section may be contained entirely within a packet payload or may be extended in a series of tables over a number of transport packets. In the MPEG-2 context, the term "table" is often used to refer to a single table of data, whilst "section" refers to one of a plurality of tables with the same TID value.

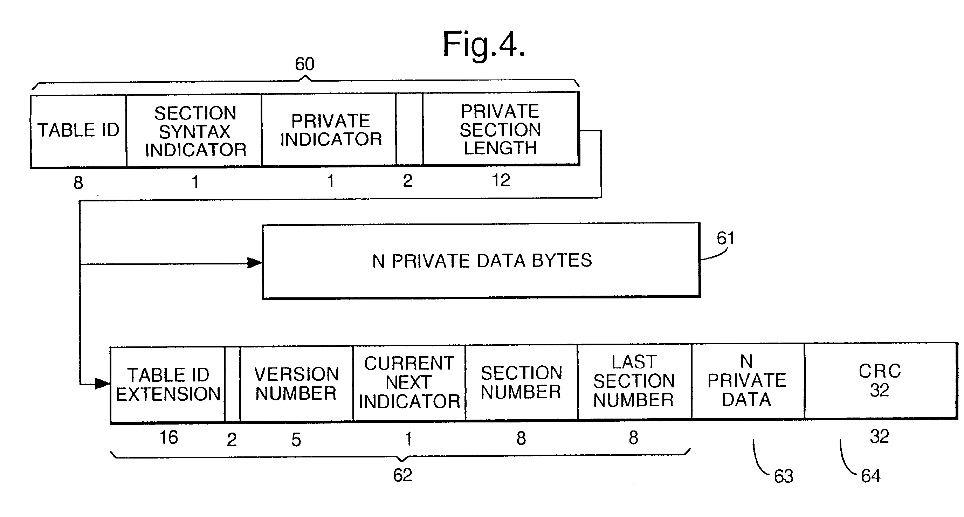

As with transport packet data and PES packet data, the data structure of a table or section is additionally defined by the MPEG-2 standard. In particular, two possible syntax forms for private table or section data are proposed; a long form or a short form, as illustrated in Figure 4.

In both the short and long form, the header includes at least the data 60 comprising:

**TABLE II**

| | |
|---|---|
| Table id | 8 bits |
| Section syntax indicator | 1 bit |
| Private indicator/reserved | 1 bit |
| ISO reserved | 2 bits |
| Section length | 12 bits |

The private indicator and private section lengths are comprised of data not fixed by the MPEG-2 standard and which may be used by the system operator for his own purposes.

In the case of short form, the header 60 is immediately followed by the payload data 61. In the case of the long form, a further header section 62 is provided before the payload 63 and the message equally includes a CRC check value 64. The long form, which is typically used when a message is so long that it must be divided into a number of sections, contains the information necessary to assemble the sections, such as the section number, the number of the last section in the sequence of sections etc.

For further information regarding the long and short form table data, the reader is directed to the MPEG-2 standard.

In the case of conditional access ECM and EMM messages, the data may usually be accommodated in a single table and the short form will be the appropriate format. A specific syntax for such short form conditional access messages is proposed in the context of the present invention, namely:

**TABLE III**

| | |
|---|---|
| Table id (filter data) | 8 bits (1 byte) |
| Section syntax indicator | 1 bit |
| Private indicator/reserved | 1 bit |
| ISO reserved | 2 bits |
| Section length | 12 bits |
| CA specific header field (filter data) | 56 bits (7 bytes) |

For such CA messages, the table id value may be set by the system operator at, for example, 0x80 and 0x81 for ECM messages (for example, odd and even messages) and 0x82 to 0x8F for EMM messages. These values are not MPEG-2 proscribed and may be chosen at the discretion of the system operator.

Equally, in the case of the CA specific header field, hereby designated as the first 7 bytes of the payload following the header, the parameters may be set by the system operator to reflect, for example, the fact that the CA message is an EMM message carrying individual, group or audience subscription information. In this manner the "header" of such a table or section is extended.

The advantages of such message syntax will become clear later, with regard to the processing and filtering of messages by the receiver/decoder, notably by using the Table id and CA specific field data.

### Receiver/decoder

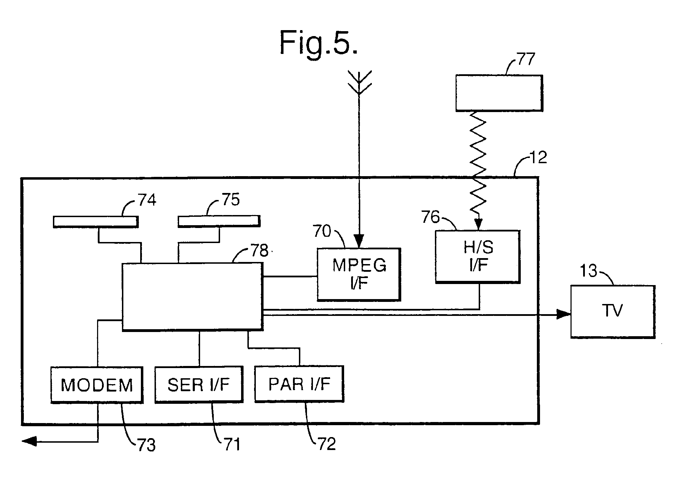

Referring to Figure 5, the elements of a receiver/decoder 12 or set-top box for use in a digital broadcast system and adapted to be used in the present invention will now be described. As will be understood, the basic elements of this receiver/decoder are largely conventional and their implementation will be within the capabilities of one skilled in the art.

As shown, the receiver/decoder 12 is equipped with several interfaces for receiving and transmitting data, in particular a tuner 70 for receiving broadcast MPEG transmissions, a serial interface 71, a parallel interface 72, and a modem 73 for sending and receiving data via the telephone network. The receiver/decoder also includes a first and second smartcard reader 74 and 75, the first reader 74 for accepting the subscription smartcard and the second reader 75 for accepting bank and/or other smartcards.

The receiver/decoder also includes a receiver 76 for receiving infra-red control signals from a handset remote control 77 and a Peritel output for sending audiovisual signals to a television 13 connected to the receiver/decoder.

Processing of digital signals received via the interfaces and generation of output signals is handled by an ensemble of hardware and software elements here grouped together as a central control unit 78. The software architecture of the control unit within the receiver/decoder may correspond to that used in a known receiver/decoder and will not be described here in any detail. It may be based, for example, on a virtual machine interacting via an interface layer with a lower level operating system implemented in the hardware components of the receiver/decoder. In terms of hardware architecture, the control unit 78 will be equipped with a processor, memory elements such as ROM, RAM, FLASH memory etc. as in known receiver/decoders.

Applications processed by the control unit 78 may be resident applications stored in the ROM or FLASH of the receiver/decoder or applications broadcast and downloaded via the MPEG interface 2 of the receiver/decoder. Applications can include program guide applications, games, interactive services, teleshopping applications, as well as initiating applications to enable the receiver/decoder to be immediately operational upon start-up and applications for configuring aspects of the receiver/decoder. Applications are stored in memory locations in the receiver/decoder and represented as resource files comprising graphic object descriptions files, unit files, variables block files, instruction sequence files, applications files, data files etc.

### Filtering of Conditional Access Data

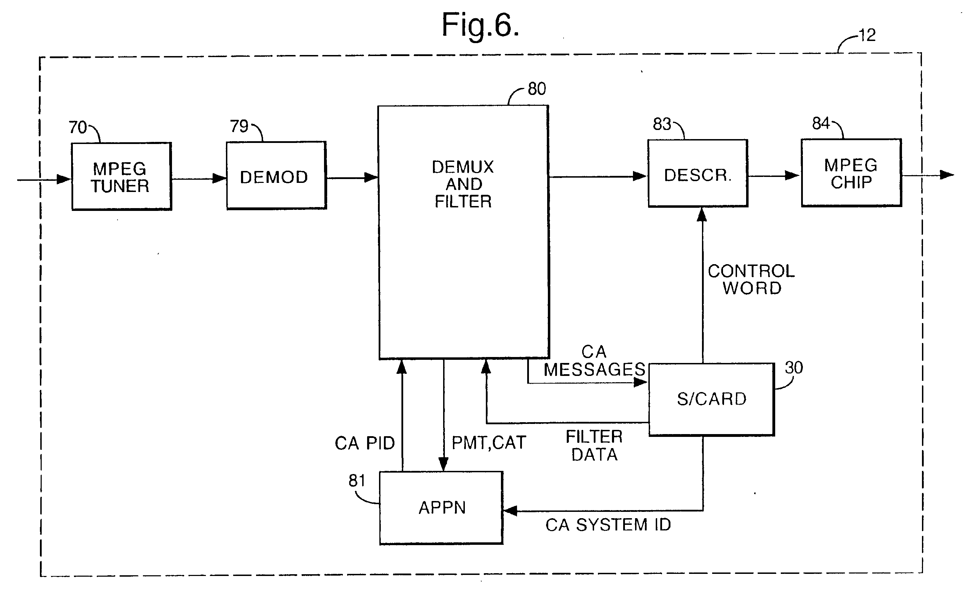

Figure 6 shows in schematic form the elements necessary for processing packet and table data in accordance with this embodiment of the invention. As will be understood, the elements shown in this figure may be implemented in hardware, software or in combination of the two.

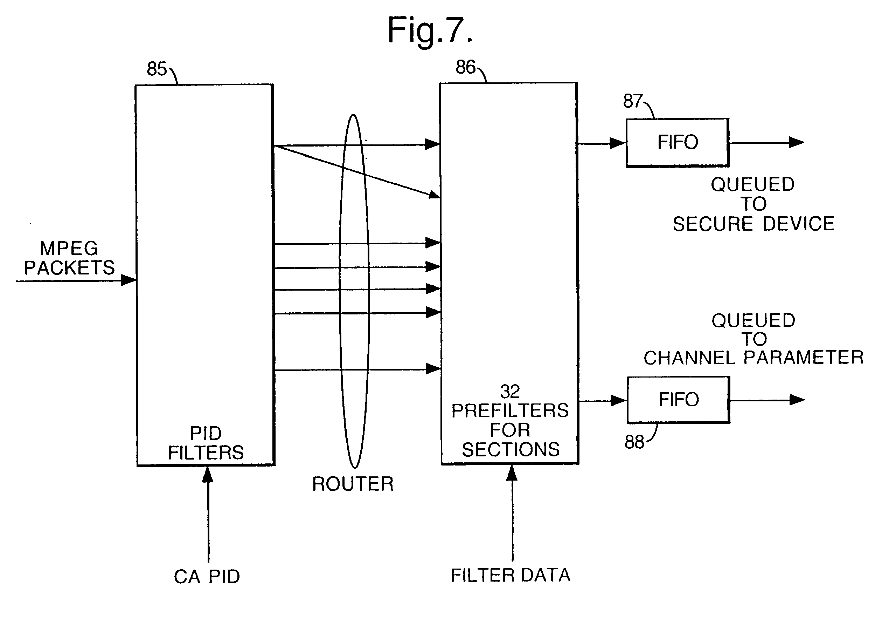

The broadcast transmission received from the satellite receiver are passed via the conventional tuner 70 and an associated demodulator unit 79. The tuner 70 typically scans a range of frequencies, stopping when a chosen carrier frequency is detected within that range. The signals are then treated by the demodulator unit 79 which extracts and forwards the transport packet stream to a demux and filter unit 80. The filter structure of the demux and filter unit 80 will be described in detail below in relation to Figure 7. As will be understood, the actual choice of components needed to implement such a unit is at the discretion of the manufacturer and the most important aspect of such a unit is the chosen filter configuration.

In the case of data encrypted in accordance with a conditional access system as per the present embodiment, the filter unit interacts with a smartcard 30 (or any other secure device) inserted in the receiver/decoder 12 and a channel parameter application 81, typically implemented as a software application in the receiver/decoder.

The filter unit 80 extracts from the transport packet stream the PMT and CAT tables present in the stream. Referring back to Figure 3, this filtering operation is carried out at a PID level, the CAT table being identified by the PID value 0x01 and the appropriate PMT table corresponding to the chosen broadcast channel being extracted via the PAT table (PID value: 0x00) and the PID value of the chosen channel identified in the PAT table.

The channel parameter application 81 additionally receives from the smartcard 30 an identification of the conditional access system associated with that smartcard. Again, referring back to Figure 3, a first conditional access system is associated with ECM and EMM data in the packets 45 and 48, respectively. Using the conditional access system ID received from the smartcard 30 and the PMT and CAT tables received from the filter unit 80, the application 81 determines the PID values of the conditional access packets associated with the conditional access system in question and returns these values to the filter unit 80.

In the case of a simplified system, where a relatively small number of ECM and EMMs are emitted, no other filtering may be necessary and these PID values may be used by the filter unit 80 to extract all relevant ECM and EMM private sections from the identified packets and to thereafter forward the data contained within these sections to the smartcard 30.

This conditional access data is then processed by the microprocessor within the smartcard 30 and the control word associated with the transmission passed to a descrambling unit 83. The descrambling unit 83 receives scrambled audiovisual or other data information extracted from the transport packet stream by the demux and filter unit 80, descrambles the information using the control word and thereafter passes the data to a convention MPEG-2 chip which prepares the data for subsequent display on the associated television display.

However, whilst a PID level filter enables an extraction of those ECM and EMM messages associated exclusively with the conditional access system in question, there may nevertheless be a large proportion of messages irrelevant to the user. These messages may include group EMM messages for other user groups, individual EMM messages for other users etc. The throughput of conditional access messages passed to the smartcard may therefore be very high. Given the limitations of the processor power and memory of smartcards, this throughput may be in practice more than the card can handle.

In order to overcome this problem, the smartcard 30 is adapted to pass further filter data to the unit 80 for use in a section or table level filter process.

Referring to the Table III above, tables containing conditional access data include Table id and CA specific header fields which are chosen to identify, for example, the presence of an EMM or ECM (table id values 0x80 or 0x81 and 0x82 to 0x8F, respectively) and the type of message (CA specific data identifying the group concerned by a group EMM message, the presence of an audience EMM message etc.). Depending on the data that it requires, the smartcard 30 will send the necessary table id and CA specific data to configure the filter unit to extract and return only those conditional access messages of interest to the smartcard. In this way, the flow of data sent to the smartcard may be reduced to conform with the processing capabilities of the smartcard microprocessor.

Referring to Figure 7, the details of the filtering unit 80 will be described. Typically, the unit may be implemented as a hardware resource, driven by a firmware managing application with the receiver/decoder. As shown, a first set of filters 85 carries out a PID filtering process using the CA PID information received from the channel parameter application. The PID filters 85 may equally be configured to extract other relevant packets such as the PMT, CAT tables sent to the channel parameter application. Other PID filters (not shown) may be used to extract the audiovisual PES packet information eventually sent to the descrambler etc.

Once stripped of the packet header, the private section or table data is then routed to a set of prefilters 86 adapted to filter the 8 bytes in the extended header of a table. As shown in Table III, 1 byte of the extended header is associated with the table id, 7 bytes with the CA specific information. The filtering operation is carried out by comparison of the 8 byte pattern in a table with the filter data received from the smartcard. Some bits within the 8 byte, 64 bit pattern may be masked or ignored in the evaluation. In this embodiment, 32 different patterns are proposed, a subset of these patterns being applied by the prefilters in dependence of the information received from the smartcard. If one pattern matches, the section is sent to the FIFO buffer element 87. If no pattern matches, the section is ignored. The filters 86 equally act to extract from the appropriate sections the PMT and CAT table information, which is passed to a FIFO buffer 88.

Due to the characteristics of the transport layer, the arrival of sections is bursty. The buffer capacity of the buffers 87, 88 must be sufficient to handle an average rate of 5Mbits/s, with the insertion of packets being based on a regular allocation with a possible deviation of ± 25%.

In order to better understand the invention, a proposed example of operating instructions handled by the section filters 86 will now be outlined.

### Filter_all_sections (Filter_id, Target, Mask, Trigger_conditions, p/n)

This command retrieves every section matching the target except masked bits after trigger_conditions occurred.

### Filter_next_section (Filter_id, Target, Mask, Trigger_conditions, p/n)

This command retrieves the next section matching the target except masked bits after trigger_conditions occurred. Trigger_conditions are related to other filters previously identified as matching.
*Filter_id* is an index between 0 and 31, pointing to a filter and an output queue. In addition, it gives the queuing priority, 0 being the highest priority.
*Target* is an 8 bytes pattern.
*Mask* is an 8 bytes pattern showing the bits to be masked in the target, value 0 means masked.
*Trigger_conditions* is a 32 bits bitmap, ORing filter_id triggering that filter. Bit set at 0 means no trigger condition. Self trigger condition is ignored.
*p*/*n* is a value, normally set to 1, positive for normal operation as described above. When set to 0 it means negative filtering, i.e., retrieve sections not matching target.

### Examples of use:

### Example 1:

Filter_all_sections(5, 0x8C7C453AA8BBFF00, 0XFF557FFFEEFFFF00, 0, 1)
will capture all EMMs corresponding to matching criteria.

### Example 2:

Filter_next_section(0, 0x8000000000000000, 0xFF00000000000000, 0, 1)
Filter_next_section(1, 0x8100000000000000, 0xFF00000000000000, 5, 1)
Filter_next_section(2, 0x8000000000000000, 0xFF00000000000000, 3, 1)
will start an ECM capture process with odd/even toggle.

### Example 3:

Filter_next_section(8, 0xPMT_TID0000Version_number00000000, 0xFF00001F00000000, 0, 0)
Filter_next_section(1, 0x8100000000000000, 0xFF00000000000000, 0x14, 1)
Filter_next_section(2, 0x8000000000000000, 0xFF00000000000000, 0x12, 1)
will start an ECM capture process with odd/even toggle, starting when there is a change in the PMT.

In terms of communication of CA messages and filter data to and from the smartcard 82 and filter unit 80, a standard protocol such as ISO7816 may be used. Since not all of the data in the filtered private section is required by the smartcard 82, the section may be modified and a message of the following format sent to the smartcard:

| | |
|---|---|
| Table id | 8 bits |
| Zero | 11 bits |
| Filter id | 5 bits |
| CA specific header field | 56 bits |
| CA message | N*8 bits |

The meaning of each of these terms will be clear from the above description. In terms of the filter data sent from the smartcard 82 to the filter 80, the following format may be used:

| | |
|---|---|
| Number of filters | 8 bits |
| Filtering instruction | 5 bits |
| Filter id | 5 bits |
| Target | 64 bits |
| Mask | 64 bits |
| Trigger conditions | 5 bits |
| p/n | 1 bit |

| | |
|---|---|
| *Number_of_filters* describes the number of filters to be set in this instruction. *Filtering_instruction* is describing the type of instruction (filter next section, filter all sections). *Filter_id* is an index pointing to a filter and an output queue. In addition, it gives the queuing priority, 0 being the highest priority. *Target* is the target pattern. *Mask* is a pattern showing the bits to be masked in the target, value 0 means masked. *Trigger_conditions* is a bitmap, ORing filter_id triggering that filter. Bit set at 0 means no trigger condition. Self trigger condition is ignored. *p*/*n* is a value, normally set to 1, positive for normal operation as described above. When set to 0 it means negative filtering, i.e., retrieve sections not matching target. | |

In practice, communications between the smartcard and the receiver/decoder may be subject to a level of encryption or scrambling for security reasons. In particular, communications between the smartcard 82 and filter unit 80, as well as the control word stream sent to the descrambler unit 83 may be encoded in this way. Encryption algorithms suitable for this purpose are widely known (RSA, DES etc.).

Whilst the above embodiment has described configuration of the receiver/decoder 12 in response to an identification of the conditional access system associated with the smartcard 30, the present invention is not limited to configuration of the receiver/decoder in relation to this one security module system. The decoder may be configurable in response to any one of a number of different security module systems.

For example, the smartcard 30 may use a debiting system in which a "wallet" of electronic tokens stored in the smartcard is debited a certain amount when the subscriber purchases a PPV event. Alternatively, the smartcard 30 may use a debiting system similar to that used in a credit card, in which the receiver/decoder reads banking information stored in the smartcard and contacts a bank via the modemmed back channel 16 in order to debit the subscriber's bank account. By passing an identifier of the debiting system to an application, such as, or similar to, the channel parameter application 81, the application can configure the decoder to perform the debiting operation in the manner supported by the smartcard.

In another example, the smartcard 30 may use a crediting system in which the wallet of electronic tokens stored in the smartcard is credited a certain amount when the subscriber has viewed, for example, a particular promotional event. Alternatively, the smartcard 30 may use a crediting system similar to that used in a credit card, in which the receiver/decoder reads banking information stored in the smartcard and contacts a bank via the modemmed back channel 16 in order to credit the subscriber's bank account. By passing an identifier of the crediting system to an application, such as, or similar to, the channel parameter application 81, the application can configure the decoder to perform the crediting operation in the manner supported by the smartcard.

## Claims

1. A decoder for processing a transport packet stream comprising packets, packetised data being encapsulated within the packet payloads, said decoder comprising:
means (74) for receiving, from a portable security module (30), an identifier (CA SYSTEM ID) of a particular conditional access system;
a first filtering means (85) adapted to receive packet IDs (PIDs) of conditional access packets associated with said particular conditional access system and to extract packets with the packet IDs from the transport packet stream;
the first filtering means (85) further being adapted to extract, from the transport packet stream, a program map table (41, 42) and a conditional access table (47);
means (81) for providing the packet IDs (PIDs) of conditional access packets associated with the particular conditional access system to the first filtering means (85);
the providing means (81) further being adapted to receive from the first filtering means (85) the program map table (41, 42) and the conditional access table (47) and to determine, using the identifier (CA SYSTEM ID) of the particular conditional access system, the program map table (41, 42) and the conditional access table (47), the packet IDs of the conditional access packets associated with the particular conditional access system;
the payload of the extracted packets with packet IDs (PIDs) of conditional access packets associated with the particular conditional access system comprising a table with a table header and a table payload, the table header comprising a table ID and the table payload comprising a conditional access message and a conditional access specific header field identifying the type of message;
the receiving means (74) further being adapted to receive from the portable security module (30) filter data (FILTER DATA) comprising values of table IDs and conditional access specific headers necessary to configure a second filtering means (86);
said second filtering means (86) being adapted to receive the filter data and to filter, in response to the filter data, the payload of the extracted packets by comparison of said table ID and the conditional access specific header of each packet with the filter data.

2. A decoder according to claim 1, further **characterised in that** the second filtering means (86) comprises a plurality of filters, at least one of said filters being adapted to use said filter data to filter the extracted data.

3. A decoder according to any preceding claim, further **characterized in that** it comprises means (80) for forwarding to the security module (30) conditional access data (CA MESSAGES) included in the packetised data.

4. A decoder according to Claim 3, further **characterised in that** the conditional access data forwarded to the security module comprises entitlement control messages (ECMs) and/or entitlement management messages (EMMs).

5. A decoder according to any preceding claim, further **characterised in that** the filter data provided by the portable security module comprises data used by the second filtering means (86) to extract group and/or individual entitlement management messages addressed to the portable security module.

6. A decoder according to any of claims 3 to 5, further **characterised in that** the decoder is adapted to receive a control word generated by the portable security module (30) in response to the conditional access data forwarded thereto, the control word being used by the decoder to descramble a scrambled transmission.

7. A decoder according to any preceding claim, further **characterised in that** it is adapted to encrypt and/or decrypt communications to and from the portable security module.

8. A combination of a decoder according to any preceding claim and a portable security module, the portable security module comprising memory means storing said identifier (CA SYSTEM ID) and said filter data, and means for communicating said identifier and said filter data to the decoder.

9. A combination according to claim 8, further **characterised in that** the security module comprises a smartcard.

10. A method of processing a transport packet stream comprising packets, packetised data being encapsulated within the packet payloads, said method comprising the steps at a decoder of:
receiving, from a portable security module (30), an identifier (CA SYSTEM ID) of a particular conditional access system;
providing a first filtering means (85) with packet IDs (PIDs) of conditional access packets associated with the particular conditional access system
providing a first filtering means (85) with packet header information corresponding to the received identifier;
extracting at the first filtering means packets with the packet IDs from the transport packet stream;
extracting at the first filtering means from the transport packet stream, a program map table (41, 42) and a conditional access table (47);
providing the packet IDs (PIDs) of conditional access packets associated with the particular conditional access system to the first filtering means (85);
receiving at the providing means from the first filtering means the program map table (41, 42) and the conditional access table (47),
determining at the providing means, using the identifier (CA SYSTEM ID) of the particular conditional access system, the program map table (41, 42) and the conditional access table (47), the packet IDs of the conditional access packets associated with the particular conditional access system;
wherein the payload of the extracted packets with packet IDs (PIDs) of conditional access packets associated with the particular conditional access system comprises a table with a table header and a table payload, the table header comprising a table ID and the table payload comprising a conditional access message and a conditional access specific header field identifying the type of message;
receiving, from the portable security module, filter data (FILTER DATA) comprising values of table IDs and conditional access specific headers necessary to configure a second filtering means (86);
receiving the filter data at said second filtering means; and
filtering at the second filtering means, in response to said received filter data, the payload of the extracted packets by comparison of the table ID and the conditional access specific header of each packet with the filter data.

11. A method according to claim 10, further **characterised in that** conditional access data included in the extracted data is forwarded to the portable security module.

12. A method according to Claim 11, further **characterised in that** the conditional access data forwarded to the security module comprises entitlement control messages (ECMs) and/or entitlement management messages (EMMs).

13. A method according to any of claims 10 to 12, further **characterised in that** the filter data provided by the portable security module comprises data used by the decoder to extract group and/or individual entitlement management messages addressed to the security module.

14. A method according to any of claims 10 to 13, further **characterised in that** a control word is generated by the security module in response to the conditional access data forwarded thereto, the control word being used by the decoder to descramble a scrambled transmission.

15. A decoder according to claim 1, further comprising means (87, 88) to forward the packets filtered by the second filtering means to the portable security module.

16. A method according to claim 10, further comprising a step of forwarding the packets filtered by the second filtering means to the portable security module.

## Patentansprüche

1. Decoder für die Verarbeitung eines Transportpaketflusses mit Paketen, wobei paketierte Daten in den Paketnutzanteil eingekapselt werden und der Decoder umfasst:
Mittel (74), um von einem tragbaren Sicherheitsmodul (30) eine Kennung (CA SYSTEM ID) eines spezifischen Systems des bedingten Zugriffs zu empfangen;
erste Filtermittel (85), die dafür geeignet sind, Paket-IDs (PIDs) von mit dem konkreten System des bedingten Zugriffs verbundenen Paketen für bedingten Zugriff zu empfangen und Pakete mit den Paket-IDs aus dem Transportpaketfluss herauszuziehen;
wobei die ersten Filtermittel (85) weiter dafür geeignet sind, aus dem Transportpaketfluss eine Program-Map-Tabelle (41, 42) und eine Tabelle für bedingten Zugriff (47) herauszuziehen;
Mittel (81), um die Paket-IDs (PIDs) der mit dem konkreten System des bedingten Zugriffs verbundenen Pakete für bedingten Zugriff den ersten Filtermitteln (85) zur Verfügung zu stellen;
wobei die zur Verfügung stellenden Mittel (81) weiter dafür geeignet sind, von den ersten Filtermitteln (85) die Program-Map-Tabelle (41, 42) und die Tabelle für bedingten Zugriff (47) zu empfangen und unter Benutzung der Kennung (CA SYSTEM ID) des konkreten Systems des bedingten Zugriffs, der Program-Map-Tabelle (41, 42) und der Tabelle für bedingten Zugriff (47) die Paket-IDs der mit dem konkreten System des bedingten Zugriffs verbundenen Pakete für bedingten Zugriff zu ermitteln;
wobei der Nutzanteil der herausgezogenen Pakete mit Paket-IDs (PIDs) der mit dem konkreten System des bedingten Zugriffs verbundenen Pakete für bedingten Zugriff eine Tabelle mit einem Tabellenheader und einem Tabellennutzanteil umfasst, der Tabellenheader eine Tabellen-ID und der Tabellennutzanteil eine Nachricht für bedingten Zugriff sowie ein für bedingten Zugriff spezifisches Headerfeld, das den Nachrichtentyp identifiziert, umfasst;
die Empfangsmittel (74) weiter dafür geeignet sind, vom tragbaren Sicherheitsmodul (30) Filterdaten (FILTER DATA) zu empfangen, die Werte von Tabellen-IDs sowie für bedingten Zugriff spezifische Header umfassen, die erforderlich sind, um zweite Filtermittel (86) zu konfigurieren;
die zweiten Filtermittel (86) dafür geeignet sind, die Filterdaten zu empfangen und den Filterdaten entsprechend des Nutzanteils der herausgezogenen Pakete zu filtern, indem die Tabellen-ID und der für bedingten Zugriff spezifische Header jedes Pakets mit den Filterdaten verglichen wird.

2. Decoder nach Anspruch 1, weiter **dadurch gekennzeichnet, dass** die zweiten Filtermittel (86) eine Mehrzahl von Filtern umfassen, wobei zumindest einer der Filter dafür geeignet ist, die Filterdaten zu verwenden, um die herausgezogenen Daten zu filtern.

3. Decoder nach einem vorangehenden Anspruch, weiter **dadurch gekennzeichnet, dass** er Mittel (80) umfasst, um in den paketierten Daten enthaltene Daten für bedingten Zugriff (CA MESSAGES) an den Sicherheitsmodul (30) weiterzuleiten.

4. Decoder nach Anspruch 3, weiter **dadurch gekennzeichnet, dass** die zum Sicherheitsmodul weitergeleiteten Daten für bedingten Zugriff Berechtigungskontrollnachrichten (ECM-Nachrichten) und/oder Berechtigungsverwaltungsnachrichten (EMM-Nachrichten) umfassen.

5. Decoder nach einem vorangehenden Anspruch, weiter **dadurch gekennzeichnet, dass** die durch den tragbaren Sicherheitsmodul zur Verfügung gestellten Filterdaten Daten umfassen, die durch die zweiten Filtermittel (86) verwendet werden, um an den tragbaren Sicherheitsmodul gerichtete Gruppen- und/oder individuelle Berechtigungsverwaltungsnachrichten herauszuziehen.

6. Decoder nach einem der Ansprüche 3 bis 5, weiter **dadurch gekennzeichnet, dass** der Decoder dafür geeignet ist, ein Kontrollwort zu empfangen, das als eine Reaktion auf die zum tragbaren Sicherheitsmodul (30) weitergeleiteten Daten für bedingten Zugriff durch diesen Modul erzeugt wurde und durch den Decoder verwendet wird, um eine verwürfelte Übertragung zu entwürfeln.

7. Decoder nach einem vorangehenden Anspruch, weiter **dadurch gekennzeichnet, dass** er dafür geeignet ist, Kommunikationen an den oder vom tragbaren Sicherheitsmodul zu verschlüsseln und/oder entschlüsseln.

8. Kombination eines Decoders nach einem vorangehenden Anspruch und eines tragbaren Sicherheitsmoduls, wobei der tragbare Sicherheitsmodul Speichermittel zur Speicherung der Kennung (CA SYSTEM ID) und der Filterdaten sowie Mittel umfasst, dem Decoder die Kennung und die Filterdaten mitzuteilen.

9. Kombination nach Anspruch 8, weiter **dadurch gekennzeichnet, dass** der Sicherheitsmodul eine Smartcard enthält.

10. Verfahren zur Verarbeitung eines Transportpaketflusses mit Paketen, wobei paketierte Daten innerhalb des Paketnutzanteils verkapselt sind und das Verfahren die Schritte bei einem Decoder umfasst:
von einem tragbaren Sicherheitsmodul (30) eine Kennung (CA SYSTEM ID) eines konkreten Systems des bedingten Zugriffs zu empfangen;
ersten Filtermitteln (85) Paket-IDs (PIDs) von mit dem konkreten System des bedingten Zugriffs verbundenen Paketen für bedingten Zugriff zur Verfügung zu stellen;
ersten Filtermitteln (85) der empfangenen Kennung entsprechende Paketheaderinformationen zur Verfügung zu stellen;
bei den ersten Filtermitteln Pakete mit den Paket-IDs aus dem Transportpaketfluss herauszuziehen;
bei den ersten Filtermitteln eine Program-Map-Tabelle (41, 42) und eine Tabelle für bedingten Zugriff (47) aus dem Transportpaketfluss herauszuziehen;
den ersten Filtermitteln (85) die Paket-IDs (PIDs) der mit dem spezifischen System des bedingten Zugriffs verbundenen Pakete für bedingten Zugriff zur Verfügung zu stellen;
bei den zur Verfügung stellenden Mitteln die Program-Map-Tabelle (41, 42) und die Tabelle für bedingten Zugriff (47) von den ersten Filtermitteln zu empfangen,
bei den zur Verfügung stellenden Mitteln unter Verwendung der Kennung (CA SYSTEM ID) des konkreten Systems des bedingten Zugriffs, der Program-Map-Tabelle (41, 42) und der Tabelle für bedingten Zugriff (47) die Paket-IDs der mit dem konkreten System des bedingten Zugriffs verbundenen Pakete für bedingten Zugriff zu ermitteln;
wobei der Nutzanteil der herausgezogenen Pakete mit Paket-IDs (PIDs) der mit dem konkreten System des bedingten Zugriffs verbundenen Pakete für bedingten Zugriff eine Tabelle mit einem Tabellenheader und einem Tabellennutzanteil umfasst, der Tabellenheader eine Tabellen-ID und der Tabellennutzanteil eine Nachricht für bedingten Zugriff sowie ein für bedingten Zugriff spezifisches Headerfeld, das den Nachrichtentyp identifiziert, umfasst;
vom tragbaren Sicherheitsmodul Filterdaten (FILTER DATA) zu empfangen, die Werte von Tabellen-IDs sowie für bedingten Zugriff spezifische Header umfassen, die erforderlich sind, um zweite Filtermittel (86) zu konfigurieren;
die Filterdaten bei den zweiten Filtermitteln zu empfangen; und
als eine Reaktion auf die empfangenen Filterdaten bei den zweiten Filtermitteln den Nutzanteil der herausgezogenen Pakete zu filtern, indem die Tabellen-ID und der für bedingten Zugriff spezifische Header jedes Pakets mit den Filterdaten verglichen wird.

11. Verfahren nach Anspruch 10, weiter **dadurch gekennzeichnet, dass** die in den herausgezogenen Daten enthaltenen Daten für bedingten Zugriff an den tragbaren Sicherheitsmodul weitergeleitet werden.

12. Verfahren nach Anspruch 11, weiter **dadurch gekennzeichnet, dass** die zum Sicherheitsmodul weitergeleiteten Daten für bedingten Zugriff Berechtigungskontrollnachrichten (ECM-Nachrichten) und/oder Berechtigungsverwaltungsnachrichten (EMM-Nachrichten) umfassen.

13. Verfahren nach einem der Ansprüche 10 bis 12, weiter **dadurch gekennzeichnet, dass** die durch den tragbaren Sicherheitsmodul zur Verfügung gestellten Filterdaten Daten umfassen, die durch den Decoder verwendet werden, um an den Sicherheitsmodul gerichtete Gruppen- und/oder individuelle Berechtigungsverwaltungsnachrichten herauszuziehen.

14. Verfahren nach einem der Ansprüche 10 bis 13, weiter **dadurch gekennzeichnet, dass** als eine Reaktion auf die zum Sicherheitsmodul weitergeleiteten Daten für bedingten Zugriff ein Kontrollwort durch diesen Modul erzeugt und durch den Decoder verwendet wird, um eine verwürfelte Übertragung zu entwürfeln.

15. Decoder nach Anspruch 1, weiter Mittel (87, 88) umfassend, um die durch die zweiten Filtermittel gefilterten Pakete zum tragbaren Sicherheitsmodul weiterzuleiten.

16. Verfahren nach Anspruch 10, weiter einen Schritt umfassend, die durch die zweiten Filtermittel gefilterten Pakete zum tragbaren Sicherheitsmodul weiterzuleiten.

## Revendications

1. Un décodeur pour traiter un flux de paquets de transport comprenant des paquets, des données en paquets étant encapsulées dans la partie utile de paquet, ledit décodeur comprenant :
moyens de réception (74), d'un module de sécurité portatif (30), un identifiant (ID SYSTEME CA) d'un système d'accès conditionnel particulier ;
des premiers moyens de filtrage (85) adaptés pour recevoir des identifiant de paquet (PID) de paquets à accès conditionnel liés au dit système d'accès conditionnel particulier et pour extraire des paquets avec les identifiants de paquet du flux de paquets de transport ;
les premiers moyens de filtrage (85) de plus étant adaptés pour extraire, depuis le flux de paquets de transport, une table de mappage de programme (41, 42) et une table d'accès conditionnel (47),
des moyens (81) pour fournir les identifiants de paquet (PID) relatifs aux paquets d'accès conditionnel liés au système d'accès conditionnel particulier aux premiers moyens de filtrage (85) ;
les moyens de fourniture (81) étant de plus adaptés pour recevoir des premiers moyens de filtrage (85) la table de mappage de programme (41, 42) et la table d'accès conditionnel (47) et pour déterminer, en utilisant l'identifiant (ID SYSTÈME CA) du système d'accès conditionnel particulier, la table de mappage de programme (41, 42) et la table d'accès conditionnel (47), les identifiants de paquet des paquets d'accès conditionnel liés au système d'accès conditionnel particulier ;
la partie utile des paquets extraits avec les identifiant de paquet (PID) des paquets d'accès conditionnel liés au système d'accès conditionnel particulier comprenant une table avec un en-tête de table et une partie utile de table, l'en-tête de table comprenant un identifiant de table et la partie utile de table comprenant un message d'accès conditionnel et un champ spécifique d'en-tête d'accès conditionnel identifiant le type de message ;
les moyens de réception (74) étant de plus adaptés pour recevoir des données de filtre du module de sécurité portatif (30) (DONNEES DE FILTRE) comprenant les valeurs des identifiant de table et des en-têtes spécifiques d'accès conditionnel nécessaires pour configurer les deuxièmes moyens de filtrage (86) ;
lesdits deuxièmes moyens de filtrage (86) étant adaptés pour recevoir les données de filtre et pour filtrer, en réponse aux données de filtre, la partie utile des paquets extraits par comparaison dudit identifiant de table et l'en-tête d'accès conditionnel spécifique de chaque paquet avec les données de filtre.

2. Un décodeur selon la revendication 1, **caractérisé de plus en ce que** les deuxièmes moyens de filtrage (86) comporte une pluralité des filtres, au moins l'un des dits filtres étant adaptés pour utiliser lesdites données de filtre pour filtrer les données extraites.

3. Un décodeur selon l'une des revendications précédentes, **caractérisé de plus en ce qu'**il comprend des moyens (80) pour l'envoi au module de sécurité (30) de données d'accès conditionnel (MESSAGES CA) incluses dans les données en paquets.

4. Un décodeur selon la revendication 3, **caractérisé de plus en ce que** les données d'accès conditionnelles envoyées au module de sécurité comprennent des messages d'autorisation des droits (ECM) et/ou des messages de gestion des droits (EMM).

5. Un décodeur selon l'une des revendications précédentes, **caractérisé de plus en ce que** les données de filtre fournies par le module de sécurité portatif comportent des données utilisées par les deuxièmes moyens de filtrage (86) pour extraire des messages de gestion des droits de groupe et/ou individuels adressés au module de sécurité portatifs.

6. Un décodeur selon l'une des revendications 3 à 5, **caractérisé de plus en ce que** le décodeur est adapté pour recevoir un mot de contrôle généré par le module de sécurité portatif (30) en réponse aux données d'accès conditionnel envoyées à cet égard, le mot de contrôle étant utilisé par le décodeur pour désembrouiller une transmission brouillée.

7. Un décodeur selon l'une des revendications précédentes, **caractérisé de plus en ce qu'**il est adapté pour crypter et/ou décrypter des communications au/du module de sécurité portatif.

8. Une combinaison d'un décodeur selon l'une des revendications précédentes et un module de sécurité portatif, le module portatif de sécurité comprenant des moyens de stockage stockant ledit identifiant (ID SYSTEME CA) et lesdites données de filtre, et des moyens pour communiquer ledit identifiant et lesdites données de filtre au décodeur.

9. Une combinaison selon la revendication 8, **caractérisée de plus en ce que** le module de sécurité comprend une carte à puce.

10. Une méthode de traiter un flux de paquets de transport comprenant des paquets, les paquets de données étant encapsulées dans la partie utile du paquet, ladite méthode comprenant les étapes au niveau d'un décodeur de :
réception, d'un module portatif de sécurité (30), un identifiant (ID SYSTEME CA) d'un système d'accès conditionnel particulier ;
fournir des premiers moyens de filtrage (85) avec des identifiants de paquets (PID) des paquets d'accès conditionnel liés au système d'accès conditionnel particulier
fournir des premiers moyens de filtrage (85) avec l'information d'en-tête de paquet correspondant à l'identifiant reçu ;
extraire par les premiers moyens de filtrage de paquets avec les identifications de paquet à partir du flux de paquets de transport ;
extraire par les premiers moyens de filtrage à partir du flux de paquets de transport, d'une table de mappage de programme (41, 42) et d'une table d'accès conditionnel (47) ;
fournir les identifiants de paquet (PID) des paquets d'accès conditionnels liés au système d'accès conditionnel particulier aux premiers moyens de filtrage (85) ;
recevoir par les moyens de fourniture des premiers moyens de filtrage, la table de mappage de programme (41, 42) et la table d'accès conditionnel (47),
déterminer par les moyens de fourniture en utilisant l'identifiant (ID SYSTEME CA) du système conditionnel d'accès particulier, la table de mappage de programme (41, 42) et la table d'accès conditionnel (47), les identifiants de paquet des paquets d'accès conditions liés au système d'accès conditionnel particulier ;
où la partie utile des paquets extraits avec des identifiants de paquet (PID) des paquets d'accès conditionnel liés au système d'accès conditionnel particulier comporte une table avec un en-tête de table et une partie utile de table, l'en-tête de table comprenant un identifiant de table et la partie utile de table comprenant un message d'accès conditionnel et un champ d'en-tête spécifique d'accès conditionnel identifiant le type de message ;
recevoir, du module de sécurité portatif, des donnée de filtre (DONNÉES DE FILTRE) comprenant des valeurs des identifiants de table et des en-têtes spécifiques d'accès conditionnel nécessaires pour configurer les deuxièmes moyens de filtrage (86) ;
recevoir des données de filtre au niveau des dits deuxièmes moyens de filtrage ; et
filtrer au niveau des deuxième moyens de filtrage, en réponse aux dites données de filtre reçues, la partie utile des paquets extraits par la comparaison de l'identifiant de table et l'en-tête spécifique d'accès conditionnel de chaque paquet avec les données de filtre.

11. Une méthode selon la revendication 10, **caractérisée de plus en ce que** ces données d'accès conditionnel incluses dans les données extraites sont envoyées au module de sécurité portatif.

12. Une méthode selon la revendication 11, **caractérisée de plus en ce que** les données d'accès conditionnel envoyées au module de sécurité comprennent des messages d'autorisation des droits (ECM) et/ou des messages de gestion des droits (EMM).

13. Une méthode selon l'une des revendications 10 à 12, **caractérisée de plus en ce que** les données de filtre fournies par le module de sécurité portatif comprennent des données utilisées par le décodeur pour extraire des messages de gestion des droits de groupe et/ou individuel adressés au module de sécurité.

14. Une méthode selon l'une des revendications 10 à 13, **caractérisée de plus en ce qu'**un mot de contrôle est généré par le module de sécurité en réponse aux données d'accès conditionnelles envoyées à cet égard, le mot de contrôle étant utilisé par le décodeur pour désembrouiller une transmission brouillée.

15. Un décodeur selon la revendication 1, comprenant en outre des moyens (87, 88) de transférer les paquets filtrés par les deuxièmes moyens de filtrage au module de sécurité portatif.

16. Une méthode selon la revendication 10, comprenant en outre une étape d'envoi des paquets filtrés par les deuxièmes moyens de filtrage au module de sécurité portatif.
